Europäisches Patentamt

European Patent Office

Office européen des brevets

(19)

(11) Veröffentlichungsnummer: **0 296 376 B1**

## (12) EUROPÄISCHE PATENTSCHRIFT

(45) Veröffentlichungstag der Patentschrift:
17.07.91 Patentblatt 91/29

(51) Int. Cl.$^5$: **F16H 1/28**, F16H 57/12

(21) Anmeldenummer: 88108580.7

(22) Anmeldetag: 28.05.88

(54) Spielfreies Planetengetriebe.

(30) Priorität: 26.06.87 DE 3721064

(43) Veröffentlichungstag der Anmeldung:
28.12.88 Patentblatt 88/52

(45) Bekanntmachung des Hinweises auf die
Patenterteilung:
17.07.91 Patentblatt 91/29

(84) Benannte Vertragsstaaten:
CH DE FR GB IT LI SE

(56) Entgegenhaltungen:
DE-A- 2 558 093
DE-A- 2 913 039
FR-A- 2 483 555
FR-A- 2 580 760
US-A- 4 524 643

(73) Patentinhaber: Wittenstein, Manfred,
Dipl.-Ing.
Bismarckstrasse 19
W-6991 Igersheim (DE)

(72) Erfinder: Wittenstein, Manfred, Dipl.-Ing.
Bismarckstrasse 19
W-6991 Igersheim (DE)
Erfinder: Orlowski, Bernhard, Dipl.-Ing.
Johannesstrasse 81
W-7000 Stuttgart 1 (DE)

(74) Vertreter: Pfusch, Volker, Dipl.-Ing.
Dinkelsbühler Strasse 12F
W-7000 Stuttgart 50 (DE)

**Beschreibung**

Die Erfindung betrifft ein spielfreies Planetengetriebe nach dem Oberbegriff des Patentanspruchs 1.

Ein Zahnrad mit sich über seine Breite stetig verändernder Profilverschiebung ist praktisch gleichbedeutend mit einem Zahnrad, dessen Zähne radial außen in einem konischen Hüllmantel enden. Der Einfachheit halber werden solche Zahnräder im folgenden als konische Zahnräder bezeichnet.

Ein der vorstehend definierten Gattung entsprechendes Planetengetriebe ist aus US-A-4 524 643 bekannt. Bei jenem bekannten Getriebe wird ein theoretisch gleichbleibend spielfreier Lauf über die gesamte Lebenszeit des Getriebes angestrebt.

Zu diesem Zweck werden dort konische Zahnräder eingesetzt. Dabei werden die gegenseitig in Eingriff befindlichen Zahnräder über ihre profilverschoben ausgestalteten Zähne axial derart aneinandergeschoben und über Federkraft mit Vorspannung in dieser Stellung gehalten, daß aufgrund der sich daraus ergebenden Profilverschiebungssumme an den Zahnflanken ein Nullspiel einstellbar ist und auch während der gesamten Betriebszeit durch die Federvorspannung aufrecht erhalten bleiben soll. Unter Federvorspannung stehen dort die einzelnen Planetenräder, wobei die jeweiligen Federn gegen den Planetenradträger abgestützt auf eine Seite der Planetenräder einwirken.

Um eine solche spielfreie Zuordnung der Zahnradflanken auch tatsächlich bei dem nicht vollständig vermeidbaren Vorhandensein von Toleranzen bei den Abmessungen der einzelnen Getriebeteile erreichen zu können, müssen die Planetenräder während des Getriebelaufes nicht nur unter der vorhandenen Federbelastung axial verschiebbar sein, sondern darüber hinaus auch noch eine Pendelbewegung in ihrer Lagerung auf den jeweiligen Planetenradbolzen durchführen können. Eine solche pendelnde Lagerung der Planetenräder ist für den Toleranzausgleich insbesondere deshalb erforderlich, weil sowohl der Planetenradträger als auch das Sonnenrad jeweils pendelfrei gelagert sind.

Durch die beständige Federkraftbeaufschlagung der Planetenräder erhöht sich die Reibung an den gegeneinander abrollenden Zahnflanken, was zu erhöhten Reibverlusten, zusätzlicher Erwärmung und Verschleiß führt.

Bei einem weiteren aus DE-A-29 13 039 vorbekannten Planetengetriebe ist wegen einer starren Lagerung des Sonnenrades sowie des Planetenradträgers sowie einer für die ineinandergreifenden Zahnräder fehlenden Nachstellmöglichkeit ein dauerhafter spielfreier Betrieb nicht möglich.

Auch ein aus DE-A-25 58 093 bekanntes Planetengetriebe besitzt keine praktikablen Einstell- oder Verstellmechanismen zur Gewährleistung eines spielfreien Dauerbetriebes. Die axiale Verstellung der Zahnräder wird dort über Federn in verzahnten axial gegeneinander verschiebbaren Kupplungsteilen bewirkt. Die Federn müssen dabei so ausgelegt sein, daß ihre Kraft stets größer ist als die aus den Zahneingriffskräften der jeweiligen Planetenräder resultierenden Axial-Komponenten. Dadurch steigt einerseits die Belastung der kraftübertragenden Zahnradflanken und zum anderen sinkt der Wirkungsgrad des Getriebes.

Soweit es nach den allgemeinen Ausführungen in jener Schrift auch ausreichend sein kann, ein Getriebe mit konischen Zahnrädern lediglich spielfrei zu montieren bzw. nur einen federfreien Nachstellmechanismus vorzusehen, ist nicht erkennbar, wie diese Ausführungen konkret aussehen könnten. Der Fachmann kann sich daher nur an dem weitgehend unpraktikablen konkreten Ausführungsbeispiel orientieren, d.h. der Offenbarungsgehalt jener Schrift beschränkt sich im Prinzip auf die durch das Ausführungsbeispiel gegebenen Lehre.

Ausgehend von der gattungsbildenden US-A-4 524 643 liegt der Erfindung die Aufgabe zugrunde, ein tatsächlich funktionsfähiges hoch belastbares extrem spielarmes kleinbauendes Planetengetriebe zu schaffen, das über möglichst lange Betriebszeiten mit einem bei der Montage vorgebbaren bzw. jederzeit nachträglich einfach nachstellbaren gleichbleibenden Minimalspiel betrieben werden kann. Dabei kommt es im wesentlichen auf eine hohe Positioniergenauigkeit an der Abtriebswelle an und zwar vor allem bei wechselnden, insbesondere gegensinnigen Drehmomentbelastungen und Drehzahlen. Ferner sollen bei an der Abtriebswelle bleibend hoher Positioniergenauigkeit problemlos hohe Beschleunigungen und Verzögerungen möglich sein. Angestrebt wird ferner eine insgesamt geringe innere Reibung und niedrige Vibration (hoher Gleichlauf) des Getriebes und zwar auch bei hohen Drehzahlen bei gleichzeitig geringstmöglichem Verschleiß. Da ein Verschleiß nur minimiert und nicht absolut ausgeschlossen werden kann, soll das gewünschte Minimalspiel des Getriebes einfach nachregulierbar sein.

Gelöst wird diese Aufgabe durch eine Ausführung des gattungsgemäßen Planetengetriebes mit den kennzeichnenden Merkmalen des Anspruchs 1. Die Profilverschiebung kann über einen Teil der Breite der Zahnräder auch negativ sein und zwar bis zur Unterschnittgrenze der Zähne.

Die Aufteilung des Getriebegehäuses in ein das Hohlrad tragendes Mittelteil und zwei jeweils die Ab- bzw. Antriebswelle drehbar aufnehmende an das Mittelteil mit variablem Abstand anflanschbare Endteile ermöglicht einen denkbar einfachen Aufbau des gewünschten Getriebegehäuses mit axial gegeneinander verschiebbaren Zahnrädern.

Das spielfreie Ineinandergreifen der Zahnradflanken kann durch einfaches Einfügen von Paßscheiben zwischen Gehäuse-Mittel- und Endteilen jederzeit ein- oder nachgestellt werden.

Ferner ist für alle Zahnräder eine Schrägverzahnung vorteilhaft. Ein großer Vorteil der Erfindung besteht darin, die an der Abtriebswelle gewünschte hohe Positioniergenauigkeit im Gegensatz zu dem bekannten Stand der Technik auch bei Getrieben mit hohen und schnell wechselnden Lastmomenten tatsächlich sicher aufrecht erhalten zu können.

Eine besonders vorteilhafte Art für eine axial stufenlose Verstellbarkeit der Zahnräder zueinander läßt sich nach Anspruch 2 durch Einfügen einer Einstellscheibe zwischen das Gehäuse-Mittel- und wenigstens einem Seitenteil erreichen, wenn bei dieser Scheibe wenigstens eine der beiden Stirnseiten als gewendelt verlaufende schiefe Ebene ausgebildet und an der angrenzenden Stirnfläche des betreffenden Gehäuse-Mittel- oder Endteiles eine entsprechend geneigte Gegenfläche vorgesehen ist. Zur axialen Verstellung muß dann nur die durch Schrauben bewirkte Verbindung zwischen Gehäuse-Mittel- und entsprechendem Endteil soweit gelockert werden, daß eine Verdrehung der Einstellscheibe vor erneutem Anziehen der Verbindungsschrauben möglich ist. Die Veränderung des axialen Abstandes erfolgt dabei nach dem Prinzip wie bei den in Türscharnieren eingebauten bekannten Türhebern.

Bei dem vorliegenden Getriebegehäuse wird in der Regel ein Paar Einstellscheiben verwendet, von dem jede Einstellscheibe auf einer Seite mit einer gewendelt verlaufenden schiefen Ebene versehen ist, wobei die Neigung der schiefen Ebenen bei jeder der beiden Scheiben entgegengerichtet aufeinander abgestimmt ist. Die Stirnflächen des jeweils angrenzenden Gehäuse-Mittel- bzw. Gehäuse-Endteiles können dann in gewöhnlicher Weise plan ausgeführt sein.

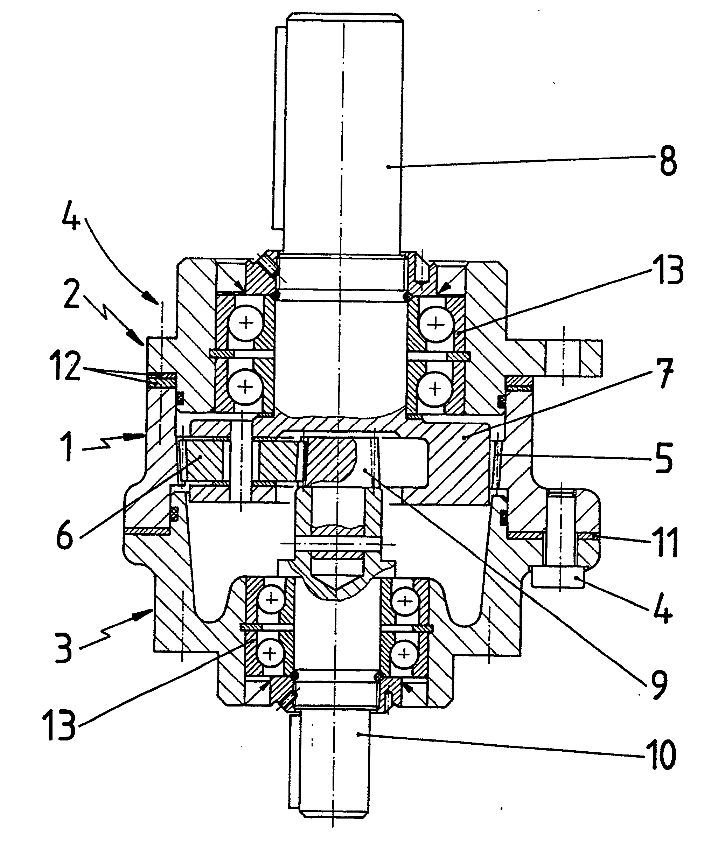

Ein Ausführungsbeispiel der Erfindung ist in der Zeichnung dargestellt, die ein Getriebegehäuse im Längsschnitt zeigt.

Das Getriebegehäuse besteht insgesamt aus einem Gehäuse-Mittelteil 1 und aus zwei Gehäuse-Endteilen 2, 3, von denen jedes an eine der Stirnflächen des Gehäuse-Mittelteiles 1 über Schrauben 4 angeflanscht ist. In das Gehäuse-Mittelteil 1 ist eine Hohlrad 5-Verzahnung eingearbeitet. In dem Endteil 2 ist die mit dem Planetenrad 6-Umlaufträger 7 fest verbundene Abtriebswelle 8 gelagert. In dem Gehäuse-Endteil 3 lagert die mit dem Sonnenrad 9 fest verbundene Antriebswelle 10. Die beiden Wellen 8 und 10 sind in den jeweils entsprechenden Gehäuse-Endteilen 2, 3 über Pendel-Wälzlager 13 axial fixiert gelagert.

Alle Zahnräder 5, 6, 9 weisen eine sich über deren Breite stetig verändernde positive Profilverschiebung auf. Dabei verläuft bei dem Hohlrad 5 und dem Sonnenrad 9 die positive Profilverschiebung in die gleiche Richtung, nämlich in Richtung auf die Antriebswelle 10, während die positive Profilverschiebung der Planetenräder 6 in die entgegengesetzte zur Abtriebswelle 8 hin verlaufende Richtung ausgerichtet ist.

Durch eine Veränderbarkeit des Abstandes der Gehäuse-Endteile 2 und 3 gegenüber dem Gehäuse-Mittelteil 1 in Achsrichtung des Getriebes ist eine axiale Verschiebung der einzelnen Zahnräder 5, 6, 9 gegeneinander möglich. Die Abstandsveränderung zwischen den Gehäuse-Endteilen 2, 3 und dem Gehäuse-Mittelteil 1 wird auf denkbar einfache Weise durch Distanz-Scheiben 11 und/oder Einstell-Scheiben 12 im Bereich der Flanschverbindungen zwischen den Gehäuseteilen 1 und 2, 3 erreicht. Während die Distanz-Scheiben 11 jeweils durch Austausch auf das notwendige Paßmaß gebracht werden müssen, kann das erforderliche Paßmaß bei den Einstell-Scheiben 12 durch Verdrehen derselben bei gelockerten Flansch-Schrauben 4 stufenlos eingestellt werden.

Die Einstell-Scheiben 12 eignen sich besonders für eine paarweise Verwendung. Jede Einstell-Scheibe 12 eines solchen Paares weist eine plane Stirnseite und eine mit einer gewendelt verlaufenden schiefen Ebene versehene Stirnseite auf. Die beiden Einstell-Scheiben 12 liegen mit ihren gewendelt schiefen Ebenen, die jeweils gleiche Neigung aufweisen, gegeneinander, während die planen Stirnflächen an die benachbarten Gehäuseteile angrenzen. Durch gegenseitiges Verdrehen dieser Einstell-Scheiben 12 verändert sich der Abstand zwischen dem betreffenden Gehäuse-Endteil 2 und dem Gehäuse-Mittelteil 1. Um die Einstell-Scheiben 12 drehen zu können, müssen sie in den Bereichen, in denen die Schrauben 4 hindurchzuführen sind, mit entsprechenden Langlöchern versehen sein. Das Verdrehen der Einstell-Scheiben erfolgt bei gelockerten Schrauben 4, die nach Einjustierung des einen spielfreien Zahnradbetrieb gewährleistenden Abstandes fest anzuziehen sind.

Die Montage des Getriebegehäuses erfolgt auf folgende Weise.

Zunächst wird das Gehäuse-Endteil 2 mit dem Planetenrad-Umlaufträger 7 mit Hilfe der Einstell-Scheiben 12 so einjustiert, daß ein spielfreier Betrieb der Planetenräder 6 in dem Hohlrad 5 gegeben ist. Danach wird das Gehäuse-Endteil 3 montiert und zwar unter Justierung eines spielfreien Betriebes des Sonnenrades 9 in den Planetenrädern 6 mittels Einlage einer dem ermittelten Abstand zwischen Gehäuse-Endteil 3 und Gehäuse-Mittelteil 1 entsprechenden Distanz-Scheibe 11. Nachdem diese Distanz-Scheibe 11 zwischen Gehäuse-Endteil 3 und Gehäuse-Mittelteil 1 eingelegt ist, die notwendige Flanschverbindung über die Schrauben 4.

Auf diese Weise läßt sich bei der Erstmontage ein exakter spielfreier Zahnradbetrieb verwirklichen, ohne daß die Zahnräder während des Getriebebetriebes unter Federbelastung stehen müssen. Eine Spieljustierung ist darüber hinaus auch nach der Erstmontage noch auf einfache Weise durch Veränderung des axialen Abstandes zwischen Gehäuse-Mittelteil 1 und den beiden Gehäuse-Endteilen 2 und 3 möglich. Besonders hilfreich sind dabei Einstell-Scheiben 12, die ja bei gelockerten Schrauben 4 durch lediglich ein Verdrehen gegeneinander ein feinstes stufenloses Verstellen des Axialabstandes ermöglichen. Für den Fall, daß zwischen dem Sonnenrad 9 und den Planetenrädern 6 einerseits sowie dem Hohlrad 5 und den Planetenrädern 6 andererseits während des Getriebebetriebes ein gleichmäßiger Verschleiß erfolgt, reicht eine nachträgliche Axial-Justierung lediglich des Gehäuse-Endteiles 2 gegenüber dem Gehäuse-Mittelteil 1 zur Spielbeseitigung an gleichzeitig allen Zahnrädern aus. Es genügt daher in der Regel, daß lediglich auf der Seite des Gehäuse-Endteiles 2 verstellbare Einstell-Scheiben 12 verwendet werden. Auf der Seite des Gehäuse-Endteiles 3 kann dagegen eine plane Distanz-Scheibe 11 verwendet werden, deren Dicke lediglich einmal bei der Erstmontage bestimmt werden muß.

Die pendelnden Wälzlager 13 ermöglichen eine hervorragende Anpassung der Flanken der einzelnen Zahnräder 5, 6, 9 aneinander.

Ein gleichmäßiger Verschleiß der Zahnflanken des Sonnenrades und des Hohlrades läßt sich durch entsprechende Auswahl und/oder unterschiedliche Behandlung des jeweiligen Materials erreichen.

## Patentansprüche

1. Spielfreies Planetengetriebe bestehend aus einem Sonnenrad (9), einem Hohlrad (5), mindestens zwei in einem Umlaufträger (7) gelagerten Planetenrädern (6), die jeweils stirnverzahnt sind, sowie einem das Hohlrad (5) fixierenden das Sonnenrad (9) und den Umlaufträger (7) drehbar aufnehmenden Getriebegehäuse, bei dem die Stirnverzahnung des Sonnenrades (9), des Hohlrades (5) und der Planetenräder (6) mit stetig veränderter Profilverschiebung ausgeführt ist, wobei die positive Verschiebung des Sonnenrades (9) und des Hohlrades (5) auf einer Seite der Zahnbreite, diejenige der Planetenräder (6) auf der anderen Seite angeordnet ist und bei dem ferner der Eingriff der Planetenräder (6) in das Sonnenrad (9) und das Hohlrad (5) axial verstellbar ist, **gekennzeichnet durch die Merkmale**

(a) das Getriebegehäuse besteht aus einem fest mit einem Hohlrad (5) verbundenen Mittelteil (1) und zwei Endteilen (2, 3), die das Mittelteil in Richtung der Getriebeachse zwischen sich einschließen und gegenüber diesem axial verstellbar sind, und

(b) in einem (3) der Endteile (2, 3) ist ausschließlich das Sonnenrad (9) und in dem anderen Endteil (2) ist ausschließlich der Umlaufträger (7), in dem die Planetenräder (6) axial und radial unverschiebbar festgelegt sind, jeweils in Pendel-Wälzlagern (13) axial unveränderbar fixiert.

2. Spielfreies Getriebe nach Anspruch 1, **dadurch gekennzeichnet**, daß mindestens zwischen einer der Stirnseiten des Gehäuse-Mittelteiles (1) und der Stirnseite des daran angrenzenden Gehäuse-Endteiles (2, 4) eine drehbare Einstell-Scheibe (12) vorgesehen ist, deren eine Stirnseite plan ist und deren andere Stirnseite als gewendelt verlaufende schiefe Ebene ausgebildet ist, wobei die gewendelte Stirnseite in eine entsprechende Gegenwendelfläche an einer entweder zweiten Verstell-Scheibe (12) oder an einer der benachbarten Stirnseite des Gehäuse-Mittel (1)- oder Endteiles (2, 3) so eingreift, daß durch Verdrehen der mindestens einen Verstell-Scheibe (12) eine axiale Abstandsveränderung zwischen Gehäuse-Mittel (1)- und entsprechendem Endteil (2, 3) erzielbar ist.

## Claims

1. Backlash-free planetary gear system consisting of a sun wheel (9), a hollow gear-wheel (5), at least two planet wheels (6) which are mounted in a planet carrier (7) and are each provided with radial teeth, and a gear system casing which fixes the gear-wheel (5) and rotatably receives the sun wheel (9) and the planet carrier (7), in which the radial teeth of the sun wheel (9), the hollow gear-wheel (5) and the planet wheels (6) are constructed with a continuously varying profile offset, the positive offset of the sun wheel (9) and of the hollow gear-wheel (5) being arranged on one side of the tooth width and that of the planet wheels (5) on the other side and in which, moreover, the engagement of the planet wheels (6) in the sun wheel (9) and the hollow gear-wheel (5) is axially adjustable, characterised by the features that

(a) the gear system casing consists of a central portion (1) rigidly connected to a hollow gear-wheel (5) and two end portions (2, 3) which enclose the central portion between themselves in the direction of the gear axis and are axially adjustable relative thereto, and

(b) solely the sun wheel (9) is axially invariably fixed in oscillating antifriction bearings (13) in one (3) of the end portions (2, 3) and solely the planet carrier (7) in which the planet wheels (6) are axially and radially unmovably fastened is axially invariably fixed in oscillating antifriction bearings (13) in the other end portion (2).

2. Backlash-free gear system according to claim 1, characterised in that, at least between one of the end faces of the casing central portion (1) and the end face of the casing end portion (2, 4) adjacent thereto, there is provided a rotatable setting disc (12) of which one end face is plane and of which the other end face is constructed as a coiled oblique plane, the coiled end face engaging in a corresponding double helix face either on a second adjusting disc (12) or on an adjacent end face of the casing central portion (1) or end portion (2, 3) such that axial spacing between casing central portion (1) and corresponding end portion (2, 3) can be varied by rotating the adjusting disc (12) of which there is at least one.

## Revendications

1. Train planétaire sans jeu, composé d'un planétaire (9), d'une couronne (5), de deux satellites (6) au moins montés dans un porte-satellites (7), respectivement munis d'une denture frontale, et d'un carter de train fixant la couronne (5), et recevant le planétaire (9) et le porte-satellites (7), avec une possibilité de rotation, sur lequel la denture frontale du planétaire (9), de la couronne (5) et des satellites (6) est réalisée avec un déport de profil variant en continu, le déport positif du planétaire (9) et de la couronne (5) étant prévu sur un côté de la largeur de dent, et celui des satellites (6) sur l'autre côté, et sur lequel l'engrènement des satellites (6) dans le planétaire (9) et dans la couronne (5) est ajustable dans le sens axial, caractérisé en ce que le carter du train se compose d'une partie centrale (1), solidaire d'une couronne (5), et de deux parties extrêmes (2, 3), qui enferment la partie centrale dans le sens de l'axe du train, et sont ajustables dans le sens axial, par rapport à cette partie centrale, et en ce que le planétaire (9) est exclusivement fixé d'une manière invariable, dans le sens axial, dans l'une (3) des parties extrêmes (2, 3), le porte-satellites (7), dans lequel sont fixés, dans les sens axial et radial, les satellites (6), étant exclusivement fixé, d'une manière invariable dans le sens axial, dans l'autre partie extrême (2), dans des roulements articulés respectifs (13).

2. Train sans jeu suivant la revendication 1, caractérisé en ce qu'une rondelle d'ajustage (12) rotative est au moins prévue entre l'une des faces frontales de la partie centrale (1) et la face frontale de la partie extrême (2, 3) contiguë du carter, l'une des faces frontales de cette rondelle étant plane, et l'autre face frontale étant réalisée sous forme de plan oblique en hélice, la face frontale en hélice s'engageant dans une contre-surface correspondante sur une seconde rondelle d'ajustage (12), ou sur l'une des faces frontales limitrophes de la partie centrale (1) ou extrême (2, 3) du carter, de manière à obtenir une modification axiale de l'écartement entre la partie centrale (1) et la partie extrême correspondante (2, 3) du carter, par une rotation de l'une des rondelles d'ajustage (12) au moins.